# EUROPÄISCHE PATENTSCHRIFT

(11) **EP 0 941 586 B1**
(45) Veröffentlichungstag und Bekanntmachung des Hinweises auf die Patenterteilung: **19.04.2000**
(21) Anmeldenummer: 97951182.1
(22) Anmeldetag: 12.11.1997
(51) Int. Cl.: H04B 7/26, H04B 1/707, H04J 13/00

(54) **EMPFANGSEINRICHTUNG FÜR EIN FUNK-KOMMUNIKATIONSSYSTEM ZUM EMPFANG VON TEILNEHMERSIGNALEN ÜBER EINE FUNKSCHNITTSTELLE**
RECEIVING DEVICE FOR A RADIO COMMUNICATION SYSTEM FOR THE RECEPTION OF SUBSCRIBER SIGNALS VIA AN AIR INTERFACE
DISPOSITIF DE RECEPTION POUR SYSTEME DE RADIOTELECOMMUNICATION POUR RECEVOIR DES SIGNAUX EMIS PAR DES ABONNES PAR L'INTERMEDIAIRE D'UNE INTERFACE RADIO

(30) Priorität: 26.11.1996 EP 96118916
(43) Veröffentlichungstag der Anmeldung: 15.09.1999
(73) Patentinhaber: SIEMENS AKTIENGESELLSCHAFT, 80333 München (DE)
(72) Erfinder: NASSHAN, Markus, D-46395 Bocholt (DE); KLEIN, Anja, D-80999 München (DE)
(86) Internationale Anmeldenummer: EP9706319
(87) Internationale Veröffentlichungsnummer: WO9824193

(56) Entgegenhaltungen:
- EP-A- 0 526 439
- DE-A- 4 329 320
- DE-A- 19 509 867
- ALENCAR M S ET AL: "THE CAPACITY FOR A DISCRETE-STATE CODE DIVISION MULTIPLE-ACCESS CHANNEL" IEEE JOURNAL ON SELECTED AREAS IN COMMUNICATIONS, Bd. 12, Nr. 5, 1.Juni 1994, Seiten 925-937, XP000464978
- MITRA U ET AL: "NEURAL NETWORK TECHNIQUES FOR MULTI-USER DEMODULATION" PROCEEDINGS OF THE INTERNATIONAL CONFERENCE ON NEURAL NETWORKS (ICN, SAN FRANCISCO, MAR. 28 - APR. 1, 1993, Bd. 3, 28.März 1993, INSTITUTE OF ELECTRICAL AND ELECTRONICS ENGINEERS, Seiten 1538-1543, XP000379505
- BEHNAAM AAZHANG ET AL: "NEURAL NETWORKS FOR MULTIUSER DETECTION IN CODE-DIVISION MULTIPLE- ACCESS COMMUNICATIONS" IEEE TRANSACTIONS ON COMMUNICATIONS, Bd. 40, Nr. 7, 1.Juli 1992, Seiten 1212-1222, XP000281073
- DUEL-HALLEN A ET AL: "MULTIUSER DETECTION FOR CDMA SYSTEMS" IEEE PERSONAL COMMUNICATIONS, Bd. 2, Nr. 2, 1.April 1995, Seiten 46-58, XP000497468
- P. JUNG, B. STEINER: "Konzept eines CDMA-Mobilfunksystems mit gemeinsamer Detection für die dritte Mobilfunkgeneration, XP499065 ", NACHRICHTENTECHNIK/ELEKTRONIK, Berlin, , Band 45, Nr. 2, Seiten 24 - 27

## Beschreibung

Funk-Kommunikationssysteme dienen der Übertragung von Teilnehmersignalen über eine Funkschnittstelle mit Hilfe hochfrequenter Schwingungen. Solche Funk-Kommunikationssysteme sind beispielsweise Mobilfunknetze oder Einrichtungen zur drahtlosen Teilnehmeranbindung an ein Festnetz. Werden die Teilnehmersignale von verschiedenen Teilnehmern über die Funkschnittstelle übertragen, so spricht man von einem Mehrteilnehmer-Nachrichtenübertragungssystem. Zur Separierung der Teilnehmer können Zeitmultiplex-, Frequenzmultiplex- oder Codemultiplexverfahren verwendet werden. Es ist ebenso möglich, diese Verfahren zu kombinieren.

Werden gemäß einem Mehrteilnehmer-Nachrichtenübertragungssystem beispielweise K verschiedene Teilnehmer der durch einen Kanal gebildeten Funkschnittstelle zugewiesen, so muß die entsprechende Empfangseinrichtung eine Separierung der Teilnehmersignale vornehmen können. Dies führt je nach Anzahl der verschiedenen Teilnehmer zu einem erheblichen Detektionsaufwand bei der Empfangseinrichtung, da die tatsächlichen Verhältnisse auf der Funkschnittstelle der Empfangsrichtung nicht bekannt sind.

Aus U.Mitra, H.V.Poor, "Neural Network Techniques for Multiuser Demodulation", Proceedings of the international conference on neural networks, San Francisco, 28.3.-1.4.1994, Bd.3, S.1538-1543; und B.Aazhang, B.-P.Paris, "Neural Networks for Multiuser Detection in Code-Division Multiple-Access Communications", IEEE Transactions on communications, Bd.40, Nr.7, 1.7.1992, S.1212-1222; sind für eine unterschiedliche Teilnehmerzahl geeignete Detektionsprinzipien für CDMA-Übertragungsverfahren bekannt. EP-A-0 526 439 zeigt einen CDMA-Empfänger, bei dem nur die stärksten Signale ausgewertet werden. Weiterhin ist aus P.Jung, B.Steiner, "Konzept eines CDMA-Mobilfunksystems mit gemeinsamer Detektion für die dritte Mobilfunkgeneration", Nachrichtentechnik/Elektronik 45(1995), März/April 1995, S.24-27, ein CDMA-Übertragungsverfahren in Zeitschlitzen bekannt.

Der Erfindung liegt die Aufgabe zugrunde, für eine derartige Empfangseinrichtung den Detektionsaufwand zu verringern. Diese Aufgabe wird durch die Empfangseinrichtung nach den Merkmalen des Patentanspruches 1 gelöst. Weiterbildungen der Erfindung sind den Unteransprüchen zu entnehmen.

Die erfindungsgemäße Empfangseinrichtung für ein Funk-Kommunikationssystem zum Empfang von Teilnehmersignalen über eine Funkschnittstelle enthält ein Mittel zum Bestimmen der Anzahl K' von aktiven Teilnehmern aus der Menge der K der Funkschnittstelle zugewiesenen Teilnehmern und ein Detektionsmittel zum Detektieren von zumindest einem Teilnehmersignal. Ein bei der Empfangseinrichtung vorliegendes Signalgemisch kann nun besser verarbeitet und die Teilnehmersignale besser detektiert werden, da bei einer Anzahl K'< K von aktiven Teilnehmern die Menge zu berücksichtigender Teilnehmer bei der Detektion verringert wird. Bei Empfangseinrichtungen mit digitalen Teilnehmersignalen verringert sich der Rechenaufwand gegebenenfalls beträchtlich.

Gemäß einer vorteilhaften Ausgestaltung der Erfindung wird der Empfang weiter verbessert, wenn das Mittel zum Bestimmen der K' aktiven Teilnehmer derart mit dem Detektionsmittel verbunden ist, daß dem Detektionsmittel die Anzahl K' der aktiven Teilnehmer und ihre Identität übermittelt wird. Sind die K' aktiven Teilnehmer durch ihre Identität den Detektionsmitteln bekannt, so kann bei der Separierung der Teilnehmersignale eine Anzahl K - K' von Teilnehmern unberücksichtigt bleiben.

Treffen die Teilnehmersignale funkblockweise bei der Empfangseinrichtung ein, dann bestimmt das Mittel zum Bestimmen der K' aktiven Teilnehmer diese vorteilhafterweise aus den Teilnehmersignalen funkblockbezogen. Da die Anzahl der K' aktiven Teilnehmer von Funkblock zu Funkblock sich verändern kann, bringt eine Bestimmung der K' aktiven Teilnehmer aus den Teilnehmersignalen der Empfangseinrichtung ständig aktuelle Werte die zum Detektieren benötigt werden. Eine anderweitige Signalisierung zur Anzahl der K' von aktiven Teilnehmern braucht dabei nicht vorgenommen werden. Bei dieser funkblockbezogenen Auswertung können für eine höhere Meßgenauigkeit mehrere Funkblöcke zusammengefaßt werden.

Die erfindungsgemäße Empfangseinrichtung ist besonders dann von Vorteil, wenn die Teilnehmersignale primär durch eine Feinstruktur getrennt sind. Eine solche Feinstruktur ist beispielsweise beim Codemultiplexverfahren (CDMA - Code Division Multiple Access) gegeben, da jedem Teilnehmer sendeseitig ein teilnehmerbezogener Code zugeordnet ist, wobei der korrespondierenden Empfangseinrichtung zumindest der Code des zumindest einen Teilnehmersignals bekannt ist.

Somit erfolgt die Separierung der Teilnehmer über ihren Teilnehmercode. Mit diesem Teilnehmercode werden die Teilnehmersignale moduliert. Werden die Teilnehmersignale, wie beispielsweise aus den deutschen Patentschriften DE 41 21 356 C2 oder DE 43 29 320 A1 bekannt, nachdem sog. JD (joint detection)-CDMA-Verfahren detektiert, dann ist es insbesondere von Bedeutung, daß die Anzahl der zu berücksichtigenden Teilnehmercodes reduziert wird. Hierbei hat die erfindungsgemäße Empfangseinrichtung besondere Vorteile.

Nach einer weiteren vorteilhaften Ausgestaltung der Empfangseinrichtung ist das Mittel zum Bestimmen der K' aktiven Teilnehmer derart mit den Detektionsmitteln verbunden, daß dem Detektionsmittel die Feinstrukturen der K' aktiven Teilnehmer übermittelt werden. Die damit übermittelten Feinstrukturen dienen dem JD-CDMA Detektionsalgorithmus zum Separieren von einem oder mehreren Teilnehmersignalen, indem auch der Einfluß der jeweils anderen K'-1 aktiven Teilnehmer berücksichtigt wird. Das Mittel zum Bestimmen der K' aktiven Teilnehmer ist vorteilhafterweise derart ausgestaltet, daß aus den K möglichen Teilnehmersignalen jeweils eine Testgröße bestimmt und mit einem Schwellwert verglichen wird. Aus diesem Vergleich ergibt sich, welcher der K Teilnehmer momentan tatsächlich aktiv ist.

Diese Testgröße ist gemäß einer vorteilhaften Ausgestaltung aus einer der Energie einer Kanalimpulsantwort des jeweiligen Teilnehmersignals proportionalen Größe bestimmt worden. Zur Entzerrung von Teilnehmersignalen wird ein Kanalmodell der Empfangseinrichtung benötigt, weshalb für jedes Teilnehmersignal eine Kanalimpulsantwort bestimmt wird, nach der das Kanalmodell abgeglichen werden kann. Die Energie der Kanalimpulsantwort bzw. äquivalente Größen wie die Leistung, ist eine geeignete Größe zur Bestimmung der Aktivität eines Teilnehmers. Alternativ kann die Testgröße auch aus einer Summe der Beträge von Abtastwerten der jeweiligen Teilnehmersignalen - z.B. des datentragenden Anteils der Teilnehmersignale - bestimmt werden. Bei einer digitalen Übertragung werden bei der Empfangseinrichtung Abtastwerte bestimmt, aus denen in Folge die Teilnehmersignale rekonstruiert werden sollen. Je stärker sich die Abtastwerte von einem Rauschen auf der Funkschnittstelle abheben, umso sicherer kann auf die Aktivität des jeweiligen Teilnehmers geschlossen werden.

Gemäß weiteren Ausgestaltungen der Erfindung kann die Testgröße aus einem datentragenden Teil des jeweiligen Teilnehmersignals (besonders geeignet, wenn keine Abgleichwerte zur Verfügung stehen), also aus den Abtastwerten für entsprechende Datensymbole, oder aus einer Testsequenz des jeweiligen Teilnehmersignals bestimmt werden. Eine Testsequenz ist dabei einer Anzahl von Symbolen, die von der jeweiligen Sendeeinrichtung zusätzlich zu den übertragenen Daten gesendet wird und die bei der Empfangseinrichtung unverzerrt bekannt ist. Aus einem Vergleich von bekannter Testsequenz zur empfangenen Testsequenz kann die Empfangseinrichtung beispielsweise die Kanalimpulsantwort bestimmen.

Ist die Menge möglicher Feinstrukturen beschränkt, dann ergibt sich für die Empfangseinrichtung der Vorteil, daß auch die Menge der K Teilnehmer einschränkbar ist und sich der Aufwand zum Bestimmen der K' aktiven Teilnehmer verringert.

Für die Festlegung des Schwellwertes muß beachtet werden, daß dieser nicht zu gering angesetzt wird, da dies zu einer fälschlichen Bestimmung von aktiven Teilnehmern führt. Allerdings darf der Schwellwert auch nicht zu hoch angesetzt werden, da sonst Teilnehmer, die zwar aktiv sind jedoch mit geringer Sendeleistung senden, nicht detektiert werden.

Vorteilhafterweise wird also der Schwellwert proportional zum Signal/Rauschverhältnis des jeweiligen Teilnehmersignals oder proportional zum durchschnittlichen Signalrauschverhältnis mehrerer Teilnehmersignale festgelegt.

Es kann auch vorgesehen sein, den Schwellwert am Signalrauschverhältnis des stärksten Teilnehmersignals zu orientieren. Wenn eine Kommunikationsverbindung mehrere Kanäle umfaßt, ist es vorteilhaft, daß der Schwellwert jeweils zum schwächsten dieser Teilnehmersignale proportional ist, damit keiner der Kanäle verloren geht. Vorteilhafterweise sind die Schwellwerte für die einzelnen der K Teilnehmer individuell einstellbar, um eine bestmögliche Anpassung an die teilnehmerbezogenen Verhältnisse der Funkschnittstelle zu erreichen.

Die erfindungsgemäße Empfangseinrichtung eignet sich insbesondere zum Einsatz in Basisstationen oder Mobilstationen eines Mobilfunksystems oder als Funkstation eines drahtlosen Zugangsnetzwerkes (RITL Radio In The Loop).

Die Erfindung wird im folgenden bezugnehmend auf zeichnerische Darstellungen anhand von Ausführungsbeispielen näher erläutert.

Dabei zeigen
- FIG 1: ein Mobilfunknetz,
- FIG 2: ein Blockschaltbild eines Nachrichtenübertragungssystems, bei dem die Nachrichtenkanäle für die K Teilnehmer lediglich durch den Teilnehmercode getrennt sind,
- FIG 3: ein Blockschaltbild einer erfindungsgemäßen Empfangseinrichtung mit Bestimmung der K' aktiven Teilnehmer aus Ausgangswerten eines Kanalschätzer, und
- FIG 4: ein Blockschaltbild einer erfindungsgemäßen Empfangseinrichtung mit einer Ermittlung der K' aktiven Teilnehmer mit Hilfe von Ausgangswerten von digitalen angepaßten Filtern.

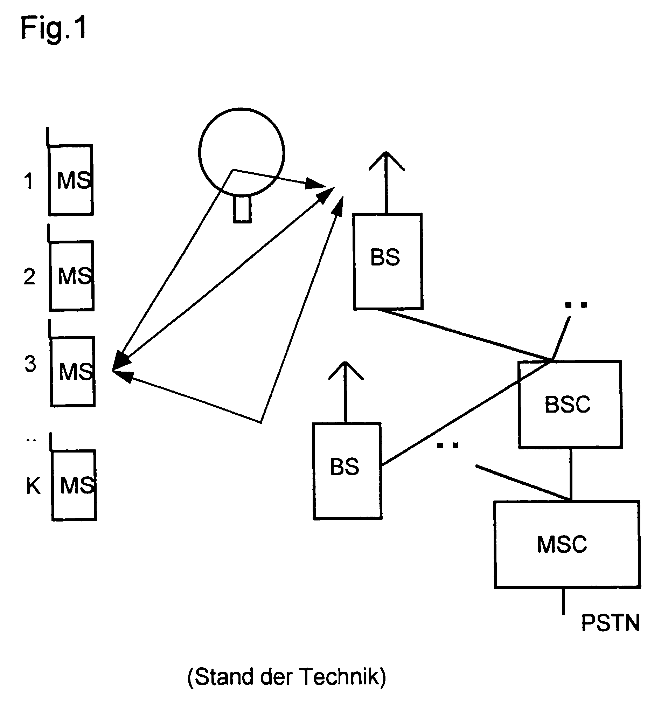

Das Mobilfunknetz nach FIG 1, siehe dazu auch J. Biala, "Mobilfunk und intelligente Netze" Vieweg Verlag Wiesbaden/Braunschweig, 1995 und P. Jung, "Konzept eines CDMA-Mobilfunksystems mit gemeinsamer Detektion für die dritte Mobilfunkgeneration", Teile 1 und 2, Nachrichtentechnik/ Elektronik, Berlin, 1995, Nr. 1, S.10-14, und Nr. 2., S. 24-27, besteht aus zumindest einer Mobilvermittlungsstelle MSC, die mit weiteren Mobilvermittlungsstellen MSC vernetzt ist bzw. den Netzübergang zu einem Festnetz PSTN herstellt. Weiterhin ist die dargestellte Mobilvermittlungsstelle MSC zumindest mit einem Basisstationscontroller BSC verbunden. Nach FIG 1 sind nach dem Basisstationscontroller zwei Basisstationen BS verbunden. Zwischen einer Basisstation BS und Mobilstationen MS1, MS2, MS3 bis MSK besteht eine Funkschnittstelle über die die Teilnehmersignale von bzw. zu den K Mobilstationen übertragen werden.

Dem Mobilfunknetz ist weiter ein Operations- und Wartungszentrum OMC zugehörig, das mit einer Mobilvermittlungsstelle MSC verbunden ist und zur Überwachung der Leistungsparameter des Mobilfunknetzes sowie zur Wartung und Fehlerkontrolle vorgesehen ist. Es kann ebenso vorgesehen sein, daß für Teilkomponenten des Mobilfunknetzes beispielsweise ein Basisstationssystem eigenständige Operations- und Wartungszentren bereitgestellt werden.

Ein nicht dargestelltes Funk-Kommunikationssystem zum drahtlosen Netzzugang für Teilnehmer wird beispielsweise derart realisiert, daß abgesetzte Basisstationen direkt mit Vermittlungstellen des Festnetzes verbunden sind und andererseits über eine Funkschnittstelle die Teilnehmer, die in diesem Fall nicht mobil sondern stationär sind, mit dem Festnetz verbinden.

Im folgenden wird ein Nachrichtenkanal betrachtet, bei dem die K Teilnehmer weder durch einen Zeitschlitz, wie beim TDMA-Verfahren, noch durch ihre Frequenz, wie beim FDMA-Verfahren, getrennt sind. Die Teilnehmersignale werden also in einem durch eine Frequenz und gegebenenfalls einen Zeitschlitz charakterisierten Kanal durch einen Teilnehmercode unterschieden. Die im folgenden geschilderte Empfangseinrichtung ist jedoch auch einsetzbar, wenn eine anderweitige Teilnehmerseparierung erfolgt. Bei der Separierung der Teilnehmer durch ihren Teilnehmercode werden auf der Sendeseite die Teilnehmersignale mit dem Teilnehmercode moduliert und auf der Empfangsseite anhand der dort vorliegenden Teilnehmercodes nach JD-CDMA-Verfahren detektiert.

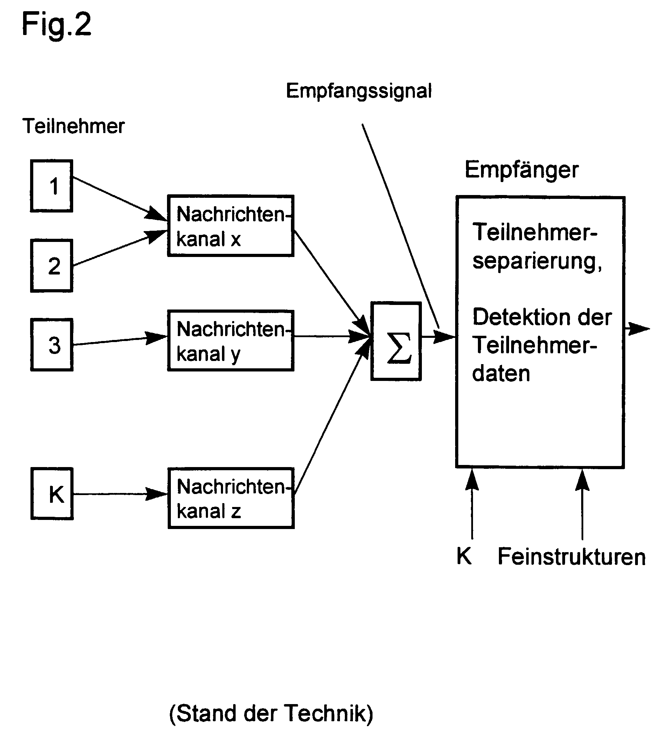

Bei dem Nachrichtenübertragungssystem nach FIG 2, bei dem die Teilnehmer durch Mobilstationen gebildet sind, werden die Teilnehmersignale über verschiedenartige Nachrichtenkanäle übertragen und treffen bei der Empfangseinrichtung als ein Summensignal ein.

Die Nachrichtenkanäle der verschiedenen Teilnehmer können durch die Position der Mobilstation in Bezug auf die Empfangseinrichtung, durch eine Mehrwegeausbreitung, sowie durch Beugungen oder Reflektionen an Hindernissen auf verschiedenartigste Weise beeinflußt bei der Empfangseinrichtung eintreffen und sich dort überlagern.

Ist die Empfangseinrichtung ein Empfänger einer Basisstation BS eines Mobilfunknetzes, dann findet eine Separierung der K Teilnehmersignale und eine Detektion der Daten aller Teilnehmer statt. Dazu muß die Feinstruktur, die durch den Teilnehmercode gebildet wird, aller zu separierender Teilnehmer bekannt sein. Erfolgt die Separierung nach dem JD (Joint Detection)-CDMA-Verfahren dann wird bei der Separierung eines einzelnen Teilnehmersignals durch entsprechende Berücksichtigung der übrigen Teilnehmersignale, deren Teilnehmercode ebenfalls bekannt ist, eine Verbesserung des Empfangs erreicht. Der Empfänger der Basisstation BS kann anschließend an die Detektion die Daten aller K Teilnehmer den weiteren Komponenten des Mobilfunknetzes zuführen.

Handelt es sich bei dem Empfänger um eine Mobilstation MS, dann wird üblicherweise nur ein Teilnehmersignal detektiert, wobei es auch hier von Vorteil ist, für eine verbesserte Detektion, die übrigen Teilnehmercodes zu kennen und zu berücksichtigen.

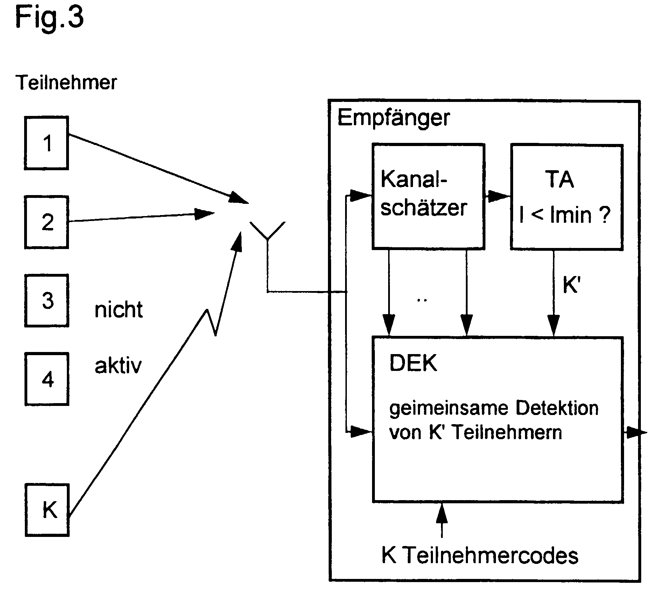

In FIG 3 ist eine erfindungsgemäße Empfangseinrichtung als Teil einer Basisstation BS eines Mobilfunknetzes gezeigt. K Teilnehmer sind dabei der Funkschnittstelle zu dieser Basisstation BS zugewiesen. Die Teilnehmer 3 und 4 sind momentan nicht aktiv. Bei Duplexverbindungen liegt dies beispielsweise bei Sprachpausen vor. Inaktive Teilnehmer treten beispielsweise auch bei einer Paketdatenübertragung auf, wenn eine Mobilstation MS momentan keine Paketdaten überträgt.

Über eine Antenneneinrichtung trifft das Summengemisch der Teilnehmersignale der Teilnehmer 1, 2 und K in der Empfangseinrichtung ein. In einem Kanalschätzer für die K Mobilfunkkanäle werden die entsprechenden Kanalmodelle für die K Teilnehmer erzeugt.

Die im Kanalschätzer gewonnenen Kanalimpulsantworten der K Teilnehmer werden auch durch ein Mittel TA zum Bestimmen der Anzahl K' von aktiven Teilnehmer dahingehend ausgewertet, daß die jeweilige Energie der Kanalimpulsantwort zum Bestimmen einer Testgröße 1 dient, die im folgenden mit einem Schwellwert lmin verglichen wird. Ist die Testgröße 1 größer oder gleich dem Schwellwert lmin, dann ist der jeweilige Teilnehmer aktiv. Durch Auswertung der Testgrößen 1 aller K Teilnehmer wird die Anzahl der K' momentan aktiven Teilnehmer bestimmt. Die Einrichtung TA zum Bestimmen der K' aktiven Teilnehmer ist, wie auch der Kanalschätzer, mit einem Detektionsmittel DEK verbunden. Der Kanalschätzer übermittelt dem Detektionsmittel DEK Werte zu den Kanalmodellen, währenddessen das Mittel TA dem Detektionsmittel DEK die Anzahl K', die Identität und die Teilnehmercodes der K' aktiven Teilnehmer übermittelt.

Im Detektionsmittel DEK, das ebenso das Summengemisch der Teilnehmersignale der K Teilnehmer aufnimmt, findet eine gemeinsame Detektion für die K' aktiven Teilnehmer statt. Es kann dabei alternativ vorgesehen sein, daß die Teilnehmercodes nicht von dem Mittel TA zum Bestimmen der K' aktiven Teilnehmer dem Detektionsmittel DEK mitgeteilt werden, sondern dem Detektionsmittel DEK die Menge der K momentan zugewiesenen Teilnehmercodes bereits vorliegt und über die Identität der K' aktiven Teilnehmer eine entsprechende Auswahl erfolgt. Am Ausgang des Detektionsmittels DEK liegen die Daten der K' aktiven Teilnehmer vor.

Alternativ zur Energie der Kanalimpulsantwort kann auch eine Summe der Beträge von Abtastwerten der jeweiligen Teilnehmersignale als Testgröße 1 verwendet werden. Die Schwellwerte lmin für die einzelnen K Teilnehmer sind über ein Operations- und Wartungszentrum OMC einstellbar. Die Höhe des Schwellwertes lmin orientiert sich am Signalrauschverhältnis für ein oder mehrere Nachrichtenkanäle oder alternativ an der Energie am Ausgang des Kanalschätzers oder des Datendetektors.

Die Schwellwerte lmin können anhand der Veränderungen der Funkschnittstelle über der Zeit nachgeregelt werden. Sind einer Kommunikationsverbindung zu einem Teilnehmer mehrere Teilnehmercodes also mehrere Teilnehmersignale zugeordnet, dann muß durch die Einstellung der Schwellwerte lmin sichergestellt sein, daß auch das schwächste Teilnehmersignal der Kommunikationsverbindung noch detektiert wird.

Als Detektionsalgorithmen für das Detektionsmittel DEK sind sogenannte Zero Forcing oder minimale Fehlerquadradrat (MMSE) Algorithmen mit oder ohne Rückkopplung einsetzbar. Auch aus A. Klein, "Multi User Detection of CDMA Signals-Algorithms and Applications to Cellular Mobile Radio", VDE-Verlag, Nr. 423, 1996 sind weitere Detektionsalgorithmen bekannt. Die Teilnehmercodes der Teilnehmersignale, die eine Feinstruktur bilden, können sowohl ortogonal, als auch nicht ortogonal sein. Ortogonale Teilnehmercodes bringen den Vorteil mit sich, daß das Übersprechen zwischen den einzelnen Teilnehmersignalen geringer ist. Für nicht ortogonale Codes steht eine größere Codeauswahl zur Verfügung.

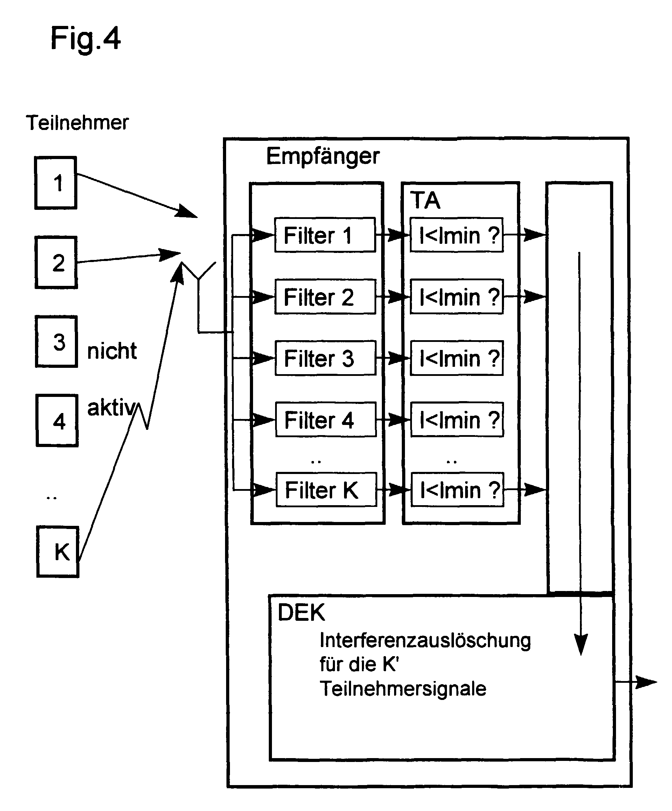

Anhand von FIG 4 soll eine weitere erfindungsgemäße Empfangseinrichtung erläutert werden. Das Signalgemisch aus den Teilnehmersignalen am Eingang der Empfangseinrichtung wird einer Anzahl von digitalen angepaßten Filtern (Matched Filters) zugeführt. Diese Filter sind an jeweils einen Teilnehmercode und die entsprechende Kanalimpulsantwort angepaßt. Die Anzahl dieser Filter muß der Anzahl möglicher Teilnehmer für die Funkschnittstelle entsprechen. Ein diese signalangepaßt Filterung durchführender Empfänger läßt sich beispielsweise als eine Bank von Korrelatoren oder als eine Bank von RAKE-Empfängern realisieren, vergleiche hierzu J.G.Proakis, "Digital Communications", New York, McGraw-Hill, 1995.

Am Ausgang dieser digitalen angepaßten Filter kann anhand der Summe von Betragsquadraten bzw. Beträgen von Abtastwerten eine Testgröße 1 gewonnen werden. Für jedes digitale angepaßte Filter findet in einem Mittel TA zum Bestimmen der K' aktiven Teilnehmer ein Vergleich der Testgröße 1 mit einem Schwellwert lmin statt. Anhand dieses individuellen Vergleiches ist bestimmbar, ob dieser Teilnehmer tatsächlich aktiv ist.

Die einzelnen Ausgangssignale der digitalen angepaßten Filter und die Entscheidung über die Aktivität des jeweiligen Teilnehmers werden einem Detektionsmittel DEK zugeführt. In diesem Detektionsmittel DEK findet für den einzelnen Teilnehmer ein Ausgleich der Interferenzen bezüglich der anderen Teilnehmer und bezüglich der in der Intersymbolinterferenzen statt, siehe dazu die deutsche Patentanmeldung 195 09 867.6. Am Ausgang des Detektionsmittels DEK liegen die Daten der K' aktiven Teilnehmer vor.

In den FIG 3 und 4 sind nur skizzenartig Komponenten der erfindungsgemäßen Empfangseinrichtung dargestellt. Dem Fachmann sind jedoch die entsprechenden HF-Komponenten und die schaltungstechnischen Komponenten zur Signalverarbeitung wohlbekannt.

Die Separierung der Teilnehmer auf der Funkschnittstelle erfolgt zusätzlich durch ein Zeitmultiplex. Den Teilnehmern ist jeweils ein durch einen Zeitschlitz zugeteilten Kanal zugeordnet, so daß die Teilnehmersignale in Funkblöcken in der Empfangseinrichtung eintreffen. Eine Aussage über die Aktivität von Teilnehmern erfolgt jeweils nach Auswertung eines empfangenen Funkblocks. Sollen kurzzeitige Übertragungsveränderungen ausgeglichen werden, erfolgt eine Aufsummierung der Testgröße 1 über mehrere Funkblöcke.

## Patentansprüche

1. Empfangseinrichtung für ein Funk-Kommunikationssystem zum Empfang von Teilnehmersignalen über eine Funkschnittstelle, wobei K verschiedene Teilnehmer der Funkschnittstelle zugewiesen sind und die Teilnehmersignale durch eine Feinstruktur getrennt sind,
- mit einem Detektionsmittel (DEK) zum Detektieren von zumindest einem Teilnehmersignal,
**gekennzeichnet durch**,
- ein Mittel (TA) zum Bestimmen einer Testgröße (1) für die K Teilnehmersignale und zum Vergleichen der Testgröße (1) mit einem Schwellwert (1min), wobei ein Teilnehmer mit einer Testgröße (1) größer dem Schwellwert (1min) als aktiv angesehen wird und die Anzahl und Identität der K' aktiven Teilnehmer vom Detektionsmittel (DEK) zur Detektion benutzt wird.

2. Empfangseinrichtung nach Anspruch 1,
bei der das Mittel (TA) zum Bestimmen derart mit dem Detektionsmittel (DEK) verbunden ist, daß dem Detektionsmittel (DEK) die Anzahl K' der aktiven Teilnehmer und ihre Identität übermittelt werden.

3. Empfangseinrichtung nach einem der vorherigen Ansprüche, bei der die Teilnehmersignale funkblockweise eintreffen und das Mittel (TA) zum Bestimmen die K' aktiven Teilnehmer aus den Teilnehmersignalen funkblockbezogen bestimmt.

4. Empfangseinrichtung nach einem der vorherigen Ansprüche, bei der das Mittel (TA) zum Bestimmen derart mit dem Detektionsmittel (DEK) verbunden ist, daß dem Detektionsmittel (DEK) die Feinstrukturen der K' aktiven Teilnehmer übermittelt werden.

5. Empfangseinrichtung nach einem der vorherigen Ansprüche, bei der das Mittel (TA) zum Bestimmen der K' aktiven Teilnehmer derart ausgestaltet ist, daß die Testgröße (1) aus einer der Energie einer Kanalimpulsantwort des jeweiligen Teilnehmersignals proportionalen Größe bestimmt wird.

6. Empfangseinrichtung nach einem der Ansprüche 1 bis 4, bei der das Mittel (TA) zum Bestimmen der K' aktiven Teilnehmer derart ausgestaltet ist, daß die Testgröße (1) aus einer Summe der Beträge von Abtastwerten der jeweiligen Teilnehmersignale bestimmt wird.

7. Empfangseinrichtung nach einem der Ansprüche 1 bis 4, bei der das Mittel (TA) zum Bestimmen der K' aktiven Teilnehmer derart ausgestaltet ist, daß die Testgröße (1) aus einem datentragenden Anteil des jeweiligen Teilnehmersignals bestimmt wird.

8. Empfangseinrichtung nach einem der Ansprüche 1 bis 4, bei der das Mittel (TA) zum Bestimmen der K' aktiven Teilnehmer derart ausgestaltet ist, daß die Testgröße (1) aus einer Testsequenz des jeweiligen Teilnehmersignals bestimmt wird.

9. Empfangseinrichtung nach einem der vorherigen Ansprüche, in der eine beschränkte Menge von Feinstrukturen vorliegt, die von den K Teilnehmern benutzt werden können.

10. Empfangseinrichtung nach einem der vorherigen Ansprüche, bei der die Feinstrukturen einen Teilnehmercode beinhalten.

11. Empfangseinrichtung nach einem der vorherigen Ansprüche, bei der der Schwellwert (1min) proportional zum Signal/Rauschverhältnis des jeweiligen Teilnehmersignals festgelegt ist.

12. Empfangseinrichtung nach einem der vorherigen Ansprüche, bei der der Schwellwert (1min) proportional zum durchschnittlichen Signal/Rauschverhältnis mehrerer Teilnehmersignale festgelegt ist.

13. Empfangseinrichtung nach einem der vorherigen Ansprüche, bei der der Schwellwert (1min) proportional zum leistungsschwächsten Teilnehmersignal einer mehrere Kanäle umfassenden Kommunikationsverbindung festgelegt ist.

14. Empfangseinrichtung nach einem der vorherigen Ansprüche, bei der der Schwellwert (1min) für einzelne der K Teilnehmer individuell einstellbar ist.

15. Empfangseinrichtung nach einem der vorherigen Ansprüche, mit einem Kanalschätzer (KS) zur Auswertung der Teilnehmersignale, der mit dem Mittel (TA) zum Bestimmen der Anzahl K' aktiven Teilnehmern und mit einem Detektionsmittel (DEK) verbunden ist.

16. Empfangseinrichtung nach einem der vorherigen Ansprüche, zum Detektieren von Teilnehmersignalen in einer Basisstation (BS) eines Mobilfunksystems.

17. Empfangseinrichtung nach einem der Ansprüche 1 bis 15, zum Detektieren eines Teilnehmersignals in einer Mobilstation (MS) eines Mobilfunksystems.

18. Empfangseinrichtung nach einem der Ansprüche 1 bis 15, zum Detektieren zumindest eines Teilnehmersignals in einer Funkstation (FS) eines drahtlosen Zugangsnetzwerkes.

## Claims

1. Receiving device for a radio communication system to receive subscriber signals via a radio interface, whereby K various subscribers are assigned to the radio interface and the subscriber signals are separated by a fine structure,
- with a detection means (DEK) for detecting at least one subscriber signal,
characterised in that
- a means (TA) for determining a test variable (1) for the K subscriber signals and comparing the test variable (1) with a threshold value (1min), whereby a subscriber with a test variable (1) greater than the threshold value (1min) being considered active and the number and identity of the K' active subscribers being used by the detection means (DEK) for detection.

2. Receiving device in accordance with claim 1, whereby the means (TA) for determining is connected to the detection means (DEK) in such a way that the number K' of active subscribers and their identities are passed to the detection means (DEK).

3. Receiving device in accordance with one of the previous claims, whereby the subscriber signals are received in blocks of radio transmission and the means (TA) for determining the K' active subscribers is determined from subscriber signals relative to radio transmission blocks.

4. Receiving device in accordance with one of the previous claims, whereby the means (TA) for determining is connected to the detection means (DEK) in such a way that the fine structures of the K' active subscribers are passed to the detection means (DEK).

5. Receiving device in accordance with one of the previous claims, whereby the means (TA) for determining the K' active subscribers is arranged in such a way that the test variable (1) is determined from a variable which is proportional to the energy of a channel pulse response of the particular subscriber signal.

6. Receiving device in accordance with one of the claims 1 to 4 whereby, the means (TA) for determining the K' active subscribers is arranged in such a way that the test variable (1) is determined from a total of the amounts of samples of the particular subscriber signals.

7. Receiving device in accordance with one of the claims 1 to 4, whereby the means (TA) for determining the K' active subscribers is arranged in such a way that the test variable (1) is determined from a data-carrying component of the particular subscriber signal.

8. Receiving device in accordance with one of the claims 1 to 4, whereby the means (TA) for determining the K' active subscribers is arranged in such a way that the test variable (1) is determined from a test sequence of the particular subscriber signal.

9. Receiving device in accordance with one of the preceding claims, in which a limited amount of fine structures is present which can be used by the K subscribers.

10. Receiving device in accordance with one of the preceding claims, whereby the fine structures contain a subscriber code.

11. Receiving device in accordance with one of the preceding claims, whereby the threshold value (1min) is stipulated proportional to the signal/noise ratio of the particular subscriber signal.

12. Receiving device in accordance with one of the preceding claims, whereby the threshold value (1min) is stipulated proportional to the average signal/noise ratio of several subscriber signals.

13. Receiving device in accordance with one of the preceding claims, whereby the threshold value (1min) is stipulated proportional to the subscriber signal with the weakest power of a communication link covering several channels.

14. Receiving device in accordance with one of the preceding claims, whereby the threshold value (1min) can be separately set for the individual K subscribers.

15. Receiving device in accordance with one of the preceding claims, with a channel estimator (KS) for evaluating the subscriber signals, which is connected to the means (TA) for determining the number K' of active subscribers and to a detection means (DEK).

16. Receiving device in accordance with one of the preceding claims, for detecting subscriber signals in a base station (BS) of a mobile radio system.

17. Receiving device in accordance with one of claims 1 to 15, for detecting a subscriber signal in a mobile station (MS) of a mobile radio system.

18. Receiving device in accordance with one of claims 1 to 15, for detecting at least one subscriber signal in a radio station (FS) of a wireless access network.

## Revendications

1. Installation de réception pour un système de communication radio, destinée à recevoir des signaux de participants au moyen d'une interface radio, K différents participants étant affectés à l'interface et les signaux des participants étant séparés par une structure fine,
- comportant un moyen de détection (DEK) pour détecter au moins un signal de participant,
caractérisée par
- un moyen (TA) pour déterminer une grandeur de test (1) pour les K signaux de participants et pour comparer la grandeur de test (1) à une valeur de seuil (1min), étant entendu qu'un participant comportant une grandeur de test (1) plus grande que la valeur de seuil (1min) est considéré comme actif, et que le nombre et l'identité des K' participants actifs sont utilisés pour la détection par le moyen de détection (DEK).

2. Installation de réception suivant la revendication 1, pour laquelle le moyen de détermination (TA) est relié au moyen de détection (DEK) de telle façon que le nombre K' des participants actifs et leur identité soient transmis au moyen de détection (DEK).

3. Installation de réception, suivant l'une des revendications précédentes, pour laquelle les signaux de participants arrivent sous la forme d'un bloc radio et pour laquelle le moyen de détermination (TA) détermine les K' participants actifs à partir des signaux de participants tirés d'un bloc radio.

4. Installation de réception suivant l'une des revendications précédentes, pour laquelle le moyen de détermination (TA) est relié au moyen de détection (DEK) de telle façon que les structures fines des K' participants actifs soient transmises au moyen de détection (DEK).

5. Installation de réception suivant l'une des revendications précédentes, pour laquelle le moyen de détermination (TA) des K' participants actifs est conçu de telle façon que la grandeur de test (1) soit déterminée à partir d'une grandeur proportionnelle à l'énergie de la réponse d'impulsion de canal de chaque signal de participant concerné.

6. Installation de réception suivant l'une des revendications 1 à 4, pour laquelle le moyen de détermination (TA) des K' participants actifs est conçu de telle façon que la grandeur de test (1) soit déterminée à partir de la somme des montants de valeurs d'échantillonnage des signaux de participant concernés.

7. Installation de réception suivant l'une des revendications 1 à 4, pour laquelle le moyen de détermination (TA) des K' participants actifs est conçu de telle façon que la grandeur de test (1) soit déterminée à partir d'une partie portant les données de chaque signal de participant concerné.

8. Installation de réception suivant l'une des revendications 1 à 4, pour laquelle le moyen de détermination (TA) des K' participants actifs est conçu de telle façon que la grandeur de test (1) soit déterminée à partir d'une séquence de test de chaque signal de participant concerné.

9. Installation de réception suivant l'une des revendications précédentes, dans laquelle on dispose d'une quantité limitée de structures fines qui peuvent être utilisées par les K participants.

10. Installation de réception suivant l'une des revendications précédentes, pour laquelle les structures fines contiennent un code de participant.

11. Installation de réception suivant l'une des revendications précédentes, pour laquelle la valeur de seuil (1min) est fixée proportionnellement au rapport signal/bruit de chaque signal de participant concerné.

12. Installation de réception suivant l'une des revendications précédentes, pour laquelle la valeur de seuil (1min) est fixée proportionnellement au rapport signal/bruit de plusieurs signaux de participants.

13. Installation de réception suivant l'une des revendications précédentes, pour laquelle la valeur de seuil (1min) est fixée proportionnellement au signal de participant ayant la puissance la plus faible d'une liaison de communication comportant plusieurs canaux.

14. Installation de réception suivant l'une des revendications précédentes, pour laquelle la valeur de seuil (1min) peut être réglée individuellement pour certains des signaux de participants.

15. Installation de réception suivant l'une dès revendications précédentes, comportant un évaluateur de canal (KS) destiné à analyser les signaux de participants et qui est relié au moyen de détermination (TA) du nombre K' de participants actifs et à un moyen de détection (DEK).

16. Installation de réception suivant l'une des revendications précédentes, destinée à détecter des signaux de participants dans une station de base (BS) d'un système radio mobile.

17. Installation de réception suivant l'une des revendications 1 à 15, destinée à détecter un signal de participant dans une station mobile (MS) d'un système radio mobile.

18. Installation de réception suivant l'une des revendications 1 à 15, destinée à détecter au moins un signal de participant dans une station radio (FS) d'un réseau d'accès sans fil.
